# EUROPÄISCHE PATENTSCHRIFT

(11) **EP 0 396 867 B1**
(45) Veröffentlichungstag und Bekanntmachung des Hinweises auf die Patenterteilung: **14.08.1996**
(21) Anmeldenummer: 90104425.5
(22) Anmeldetag: 08.03.1990
(51) Int. Cl.: G01C 21/00

(54) **Navigationsverfahren**
Navigation procedure
Procédé de navigation

(30) Priorität: 12.05.1989 DE 3915631
(43) Veröffentlichungstag der Anmeldung: 14.11.1990
(73) Patentinhaber: DORNIER GmbH, D-88039 Friedrichshafen (DE)
(72) Erfinder: Metzdorff, Walter, Dr., D-7994 Friedrichshafen 24 (DE); Eibert, Max, Dr.-Dipl.-Phys., D-7990 Friedrichshafen 24/DE (DE); Lux, Peter, Dr.-Dipl.-Phys., D-7994 Langenargen (DE)

(56) Entgegenhaltungen:
- WO-A-89/12837
- DE-A- 3 110 691
- DE-A- 3 423 135
- GB-A- 2 060 306
- GB-A- 2 162 014
- TECHNICAL NOTES; Nr. 752, April 1968, seiten 1-3, W.J. HANNAN: "Laser mobility aid for the blind"
- AEU; Band 31, Nr. 7/8, 1977, Seiten 267-274; P. Lux: "A novel set of closed orthogonal funktions for picture coding".

## Beschreibung

### Navigationsverfahren

Die Erfindung betrifft ein Navigationsverfahren oder ein Navigations-Aufdatverfahren für Luftfahrzeuge nach dem Oberbegriff des Anspruchs 1.

Bei solchen Navigationsverfahren wird das vom Luftfahrzeug (Flugzeug, Hubschrauber, Flugkörper) überflogene Gebiet mit einem Sensor abgetastet und mit vorher eingespeicherten Referenzdaten verglichen. Luftfahrzeuge verwenden im allgemeinen mehrere Navigationssysteme.

Das Basisnavigationssystem ist meistens ein Trägheitsnavigationssystem, die Stützung wird entweder manuell/visuell durch den Piloten oder durch Funk-/Satellitenpeilung durchgeführt. Auch Verfahren, die durch Vergleich des überflogenen Geländes mit gespeicherter Referenzinformation arbeiten, sind bekannt. In der Anwendung sind auch Verfahren der Bildkorrelation. Dabei blickt ein abbildender Sensor (meistens im infraroten oder optischen Spektralbereich arbeitend) schräg nach vorne oder senkrecht nach unten und nimmt Bilder auf. Diese werden als Muster aus vielen Bildpunkten zwischengespeichert. Das Kontrastmuster des vorliegenden, abgebildeten Gebietes wird mit einem eingespeicherten Referenzmuster verglichen (korreliert). Aus dem Summenwert der Bildpunktübereinstimmungen wird auf die Einhaltung der Position geschlossen. Nachteilig bei diesem Verfahren ist, daß die Referenzbilder sehr gut mit den aufgenommenen Szenenbildern übereinstimmen müssen. Abweichungen der Bildinhalte, beispielsweise durch Unterschiede in Tageszeit, Beleuchtung, Jahreszeit, Bedeckung (Schnee) stören diese Verfahren und können zu Ausfällen der Funktion führen.

Verbesserungen der bestehenden Systeme wurden durch Ausweichen auf Infrarotstrahlung, aktive Beleuchtung der Gebiete und besondere Auswertemethoden erreicht. Stets war jedoch ein möglichst getreues Referenzbild und ein verhältnismäßig hoher Verarbeitungsaufwand zur Erzielung der Positionsbestimmung nötig.

Bei einer anderen Klasse von Verfahren (TERCOM, TERPROM, SITAN, SPARTAN, PENETRATE) wird die Ortsbestimmung dadurch vollzogen, daß von einem bestimmten überfolgenden Geländestreifen mittels Radar ein Höhenprofil abgetastet wird, das mit digital gespeicherten Geländehöhendaten des gleichen Gebiets von einigen hundert Meter Länge mittels eines Rechnersystems verglichen wird. Das Geländehöhenprofil wird aus der Messung der Höhe über Grund und der Höhe über einem festen Bezugsniveau gewonnen. Der abgetastete Streifen des Höhenprofils wird im Rechner mit dem betreffenden Streifen in der digital gespeicherten Höhenreferenzkarte verglichen.

Dieses Navigationssystem ist aufgrund seines Wirkungsprinzips für die Navigation über vorwiegend flachem Gelände ungeeignet. Auch die erreichbare Genauigkeit ist für hochgenaue Bestimmung der Trajektorie nicht ausreichend.

Aus der DE-A-34 23 135 ist die Aufnahme von Entfernungsbildern bekannt. Ein Entfernungsbild ist eine Abbildung eine Objekts, dessen Bildpunkte nicht wie bei einem normalen Bild den Helligkeiten oder Farben der Objektpunkte entsprechen, sondern den jeweiligen Entfernungen der entsprechenden Objektpunkte.

Aus der GB-A-2 162 014 ist ein Verfahren zur Navigation für Luftfahrzeuge bekannt, die einen Sensor, eine Bildverarbeitungsvorrichtung und einen Referenzspeicher aufweisen, wobei als Sensor ein entfernungsmessendes System benutzt wird und eine Positionsbestimmung durch Vergleich der gegenseitigen Lage von Objekten mit den entsprechenden Referenzinformationen durchgeführt wird. Diese Vorrichtung bildet den Oberbegriff des Anspruchs 1.

Aus der DE-A-31 10 691 ist ein Navigationssystem bekannt, mit dem einzelne Streifen des Geländes aufgenommen werden. Diese Szenestreifen enthalten Informationen über die rückgestreute Intensität sowie die Entfernung der abgetasteten Bodenpunkte. Aus diesen Szenestreifen werden eine Abfolge von Übergängen zwischen Geländeabschnitten unterschiedlicher Textur extrahiert. Hierbei ist wesentlich, daß die Übergänge nicht voneinander unterschieden werden und die Impulse keine Rückschlüsse auf die Art es jeweils vorliegenden Übergangs, das heißt auf den Typ der benachbarten Geländeabschnitte ermöglichen. Eine Segmentierung findet nicht statt. Stattdessen werden aufgenommene Szenestreifen durch einen Filter also sequentiell abgearbeitet.

Aufgabe der Erfindung ist es, ein Navigationssystem zu schaffen, daß seine Position genau, sicher, autonom und weitgehend unabhängig von der Tageszeit und der Jahreszeit sowie von der Witterung und der Aktualität der Daten finden kann.

Diese Aufgabe wird erfindungsgemäß gelöst von einem Verfahren mit den Merkmalen des Anspruchs 1. Ausgestaltungen der Erfindung und Vorrichtungen zur Durchführung des Verfahrens sind Gegenstände von Unteransprüchen.

Erfindungsgemäß werden automatisch Entfernungsbilder aufgenommen und geeignete Objekte daraus gesucht, erkannt und ihre Lage mit Referenzinformationen verglichen.
In einer Ausführungsform kann das System zusätzlich zur Auswertung von Entfernungsbildern auch normale Bilder (Bilder, deren Bildpunkte der reflektierten Energie entsprechen) verwenden.

In einer weiteren Ausführung kann zusätzlich zur Segmentierung und Merkmalsextraktion eine Einheit zur Bildkorrektur vorgesehen sein, die insbesondere bei niedrigen Flughöhen die geometrischen Fehler durch eine Fächerkorrektur und eine Lagefehlerkorrektur ausgleichen kann.

Dabei kann eine Suche nach bestimmten Typen von Objekten (Häuser, Wald, Straßen, Brücken) durchgeführt werden. Insbesondere kann diese Suche nach speziellen Typen von Objekten automatisch dann angesteuert werden, wenn aufgrund der Referenzinformation diese Typen von Objekten zu erwarten sind.

In einer Ausführung der Erfindung kann ein hierarchisches Verfahren zur Objektsegmentierung (z.B. die S-Transformation, veröffentlicht in Archiv für Elektronik und Übertragungstechnik, Band 31 (1977) Seiten 267 bis 274) verwendet werden.

Ein Sensor, der ohne mechanisch bewegte Teile funktioniert, wird für hohe Fluggeschwindigkeiten vorgeschlagen.

Die Erfindung bietet folgende Vorteile:
- autonome hochgenaue Navigation oder Navigationsstützung
- Einsatzfähigkeit bei Tag und Nacht
- weitgehende Unabhängigkeit von Wetter- und Beleuchtungseinflüssen, da Entfernungsbilder aufgenommen werden
- störunabhängige und robuste Arbeitsweise.

Die Erfindung wird anhand von 10 Figuren näher beschrieben.

Es zeigen:
- Figur 1: ein Blockschaltbild eines erfindungsgemäßen Navigationsverfahrens,
- Figur 2: das zeilenweise Abtasten beim Überflug,
- Figuren 3 und 4: zwei unterschiedliche Objekte,
- Figur 5: drei unterschiedliche Sensortypen,
- Figur 6: ein Funktionsdiagramm eines Sensors,
- Figur 7: ein Ablaufschema zur Segmentierung,
- Figur 8: eine bei der Segmentierung verwendete S-Transformation,
- Figuren 9 und 10: zwei Merkmalsvergleichs-Verfahren.

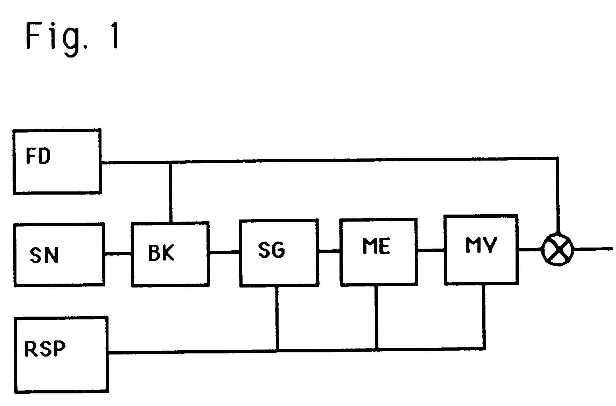

Figur 1 zeigt ein Blockschaltbild eines Geräts, mit dem das erfindungsgemäße Navigationsverfahren durchgeführt werden kann. Erfindungsgemäß sind vorgesehen ein Sensor SN, eine Bildkorrektur BK, in die die Flugzustandsdaten mit eingehen, eine Segmentierungseinheit SG, eine Merkmalsextraktionseinheit ME und eine Einheit zum Merkmalsvergleich MV mit gespeicherten Referenzdaten (Referenzspeicher RSP).

Die Vorrichtung funktioniert wie folgt:
Der Sensor SN nimmt eine Abbildung des überflogenen Gebietes auf. Die Bildkorrekturschaltung BK erzeugt daraus ein entzerrtes Bild des Geländes. In den folgenden Stufen der Verarbeitung werden Objekte, die zur Navigation geeignet sind, wie beispielsweise Gebäude, Waldstücke, Baumgruppen, Einzelbäume, Dämme, Straßen, Brücken, Bahnanlagen u.s.w. segmentiert (Segmentierungseinheit SG) und durch Attribute wie Objektklasse, Lage und Länge der Begrenzungsvektoren, Höhe, Volumen, Momente, Trägheitsachsen, Formparameter, Position von Mittelpunkt, Schwerpunkt oder Berandungspunkten oder ähnlichem beschrieben (Merkmalsextraktonseinheit ME). Eine Vergleichsschaltung (MV) prüft, ob die Folge dieser Merkmale im wesentlichen mit den Merkmalen des eingespeisten Referenzbildes (in RSP) übereinstimmen. Aus der Position der Objekte relativ zur Referenzposition erhält man einen Aufdatwert zur Korrektur des Basisnavigationssystems.

Die Bestimmung und Berechnung der Merkmale wird vor dem Flug entweder manuell, interaktiv oder automatisch in entsprechenden Referenzplanungsstationen durchgeführt. Aus Karten, Luftbildern, Satellitenfotographien oder aus digital vorliegenden topographischen Informationen (Digital Land Mass System, DLMS) wird das Fluggebiet ausgewählt und darin identifizierbare Objekte gesucht und gewichtet. Als Merkmale werden Eigenschaften von Objekten genommen, die vom Sensor vermessen werden können, aus dem Referenzmaterial extrahierbar sind und hinreichend oft auftreten. Als Sensor werden Systeme zur Aufnahme von Entfernungsbildern oder eine Kombination von Aufnahmegeräten für Entfernungsbilder und für Reflexionsbilder benutzt.

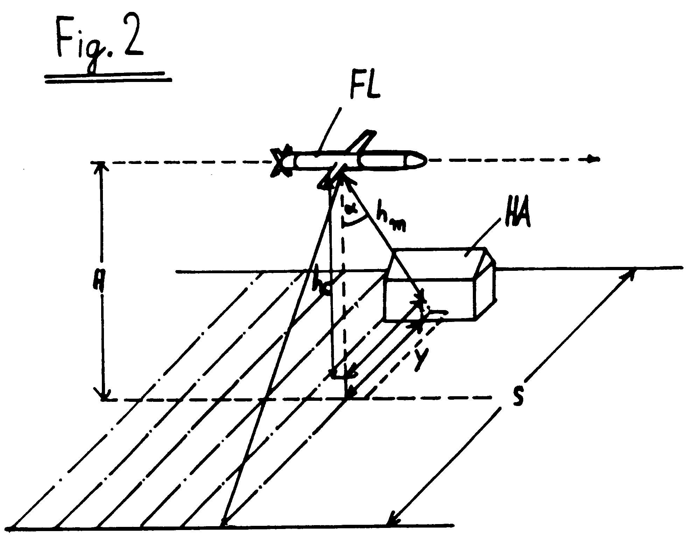

Figur 2 zeigt einen Flugkörper FL, der nach dem erfindungsgemäßen Navigationsverfahren arbeitet. Er besitzt einen Sensor, der Entfernungsbildstreifen der Breite S aufnimmt, wobei er das überflogene Gebiet in einem gewissen Winkelbereich 2 α Zeile für Zeile abtastet. Dazu sendet er Licht, welches z.B. von einem Laser erzeugt wurde, aus und registriert das zurückkommende Signal. Aus der Laufzeit und dem Winkel kann so ein Entfernungsbildstreifen des überflogenen Gebietes gewonnen werden. In der Figur sind eingezeichnet die Flughöhe H, der Winkel α , die Breite S des beobachteten Streifens, die Entfernung hm zu einem Objekt, hier dem Haus HA, die senkrechte Entfernung hc und der Abstand y von der Mittellinie des Flugpfades zum Objekt Haus HA.

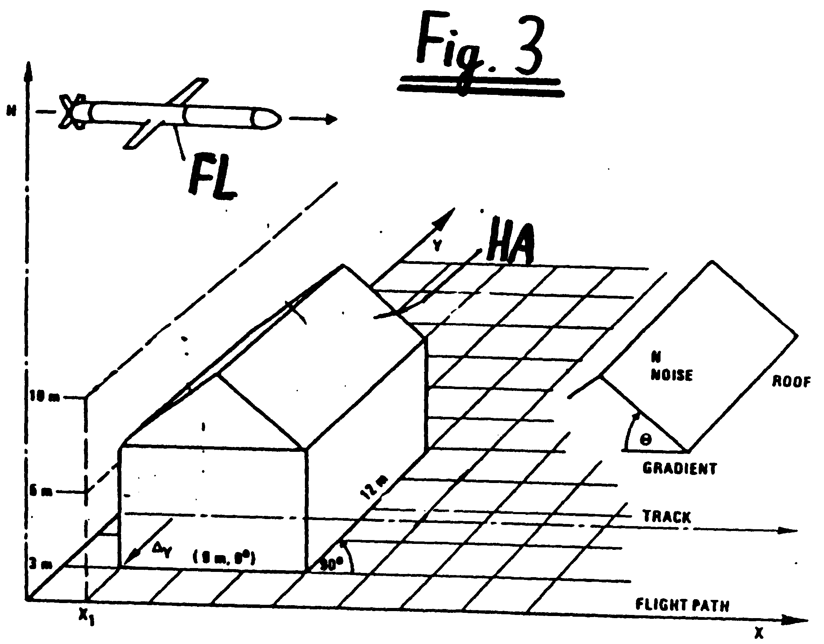

Figur 3 zeigt als beispielhaftes Objekt für ein Tiefenprofilbild ein Haus HA. Als Merkmale sind beispielsweise die Position des Hauses HA und die Begrenzungsvektoren des Grundrisses eingespeichert. Diese werden beim Überflug aus den Tiefeninformationen extrahiert. Diese Merkmale lassen sich aus den Entfernungsbildern mit entsprechender Entfernungsauflösung und Ortsauflösung anhand der weiter unten beschriebenen Segmentierungsverfahren berechnen.

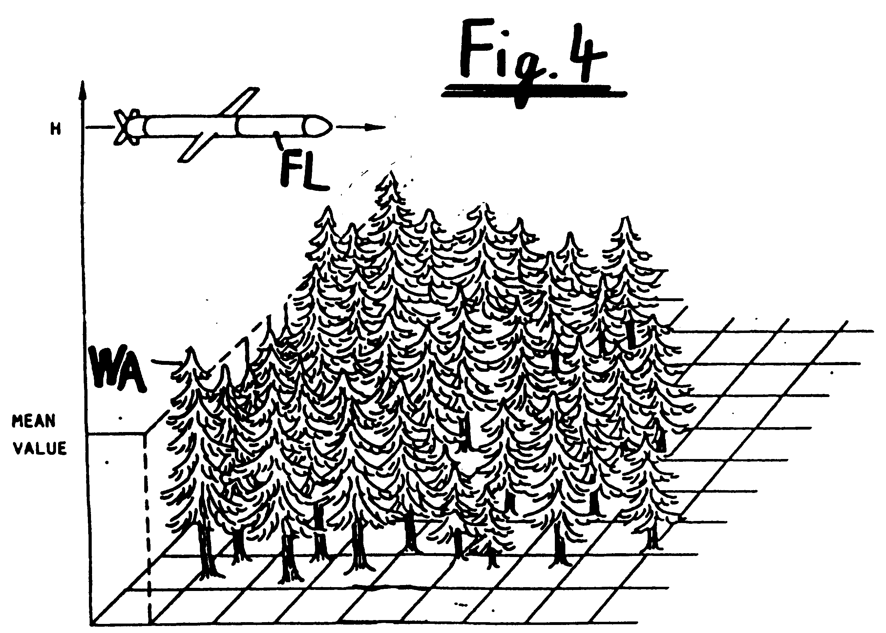

Figur 4 zeigt eine Waldecke WA als Objekt für die Navigationsaufdatung. Auch die Waldecke WA wird im wesentlichen durch die Begrenzungsvektoren und die Attribute wie beispielsweise Laub- oder Nadelwald beschrieben.

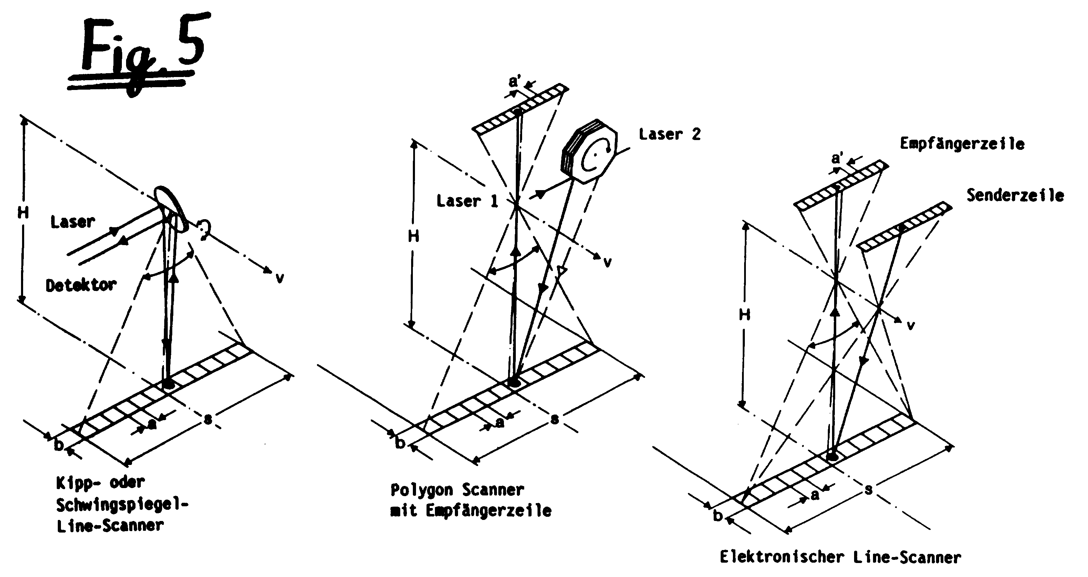

Figur 5 zeigt drei unterschiedliche Ausführungen von Abtastprinzipien, die zur Aufnahme der erfindungsgemäß verwendeten Entfernungsbildern benutzt werden können. Links ist ein Laserradar gezeigt, das kolinear zum Detektor sitzt und dessen Lichtstrahlen über einen Kipp- oder Schwingspiegel auf die zu beobachtende Linie der Länge S, die der Breite des zu beobachtenden Bereichs entspricht, abgelenkt wird. Mit a und b sind die Maße der Rasterfelder eingezeichnet. V gibt die Geschwindigkeit des Luftfahrzeugs an. Mit H ist die Flughöhe eingezeichnet.

In der Mitte der Figur 5 ist eine andere Ausführung eines Laserradars gezeigt, bei der zwei Laser über einen Polygonspiegel den Geländestreifen abtasten. Der Empfänger ist hier als Zeile (Diodenzeile) ausgebildet, die hinter einer Optik, im einfachsten Fall einer Linse, angeordnet ist. Jedem Element der Diodenzeile entspricht ein Rasterfeld (a, b) am Boden. Durch die Verwendung von zwei Lasern können höhere Impulsfolgefrequenzen und Lichtleistungen erreicht werden. Möglich ist die Ausführung aber auch mit einem Laser. Figur 5 zeigt rechts eine dritte Ausführung eines Laserradars ohne mechanisch bewegte Teile. Der Sensor wird im wesentlichen durch zwei Zeilen von Dioden gebildet (Senderzeile und Empfängerzeile), die parallel zueinander angeordnet sind und über eine Optik den entsprechenden Streifen am Gelände der Länge S abbilden. Jedem Rasterpunkt der Senderzeile entspricht ein Punkt am Boden der Abmessungen a x b und ein Rasterpunkt in der Empfängerzeile mit der Abmessung a′ . Die Winkelablenkung erfolgt bei diesem Gerät durch nacheinanderfolgendes Ansteuern der einzelnen Elemente der Senderzeile mit korreliertem Ansteuern des entsprechenden Punktes der Empfängerzeile.

Der Nachteil der mechanisch beweglichen Sensoren (Figur 5, links und Mitte) liegt in der Systemlebensdauer und der begrenzten Lagerbarkeit sowie in der schlechteren Eignung für sehr hohe Fluggeschwindigkeiten. Mit dem in der Mitte der Figur 5 gezeigten Polygon-Scanner mit Empfängerzeile können hohe Fluggeschwindigkeiten erreicht werden, jedoch ist aufgrund mechanischer Abtastung im Sendezweig auch bei dieser Ausführungsform Lebensdauer und Lagerbarkeit begrenzt. Bei dem elektronischen Line-Scanner auf der rechten Seite der Figur 5 können diese Nachteile dadurch vermieden werden, daß die Abtastung und die entsprechende Zeilenauflösung durch parallele Auslegung der entsprechenden Sende- und Empfangskanäle erreicht wurde.

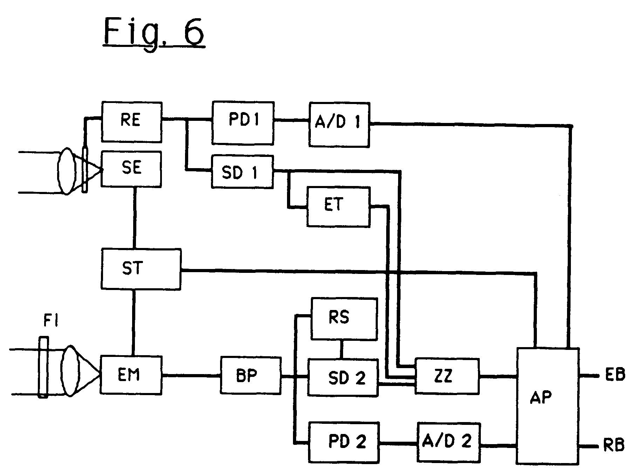

Figur 6 zeigt ein Blockschaltbild eines Navigations-Aufdatsystem-Sensors zur Durchführung des erfindungsgemäßen Verfahrens. Dieser Sensor erzeugt z.B. mit dem in Figur 5 rechts gezeigten elektronischen Line-Scanner und der Lichtimpulslaufzeitmethode Entfernungsbilder und Reflexionsbilder aus den rückgestreuten und reflektierten Anteilen des gesendeten Lichtimpulses von Szenen bzw. Objekten.

Der Abtastvorgang des Sensors zur Entfernungs- und Reflexionsbildgewinnung (Ausgänge EB und RB) erfolgt sequentiell mit der elektronisch geschalteten Lichtimpulssendereinheit SE und der Lichtimpulsempfängereinheit EM, gesteuert vom System-Timer (ST). Das Ausführungsbeispiel beinhaltet z.B. je 64 Sender- und Empfängerelemente, die über ein koaxiales oder biaxiales Optiksystem auf die zu vermessende Szene abgebildet werden.

Ein Teil des von der Sendeeinheit SE ausgesandten Lichts wird ausgekoppelt und dem Referenzempfänger RE zugeführt, der ein elektrisches Signal für die Startimpulsgewinnung im Signaldetektor SD1, sowie die Messung der Sendeleistung mittels erstem Spitzenwert-Detektor PD1 und erstem Analog/Digital-Wandler A/D1 bereitstellt. Der Startimpuls initiiert den Beginn der Zeitintervallmessung im Zeitintervallzähler ZZ und startet ein Zeittor (Entfernungstor ET), welches zur Unterdrückung von Nahbereichsechos, z.B. durch Nebel, dient.

Die 64 Empfängerelemente im Empfänger EM sind über einen elektronischen Multiplexer (nicht gezeigt) mit einer allen Kanälen gemeinsamen Signalverarbeitung verbunden. Alternativ ist ein einzelner Empfänger mit einem optischen Multiplexer (ausgeführt in integrierter Optik) eine weitere Lösungsvariante.

Zur Minimierung des Rauschens durchläuft der vom Zielobjekt rückgestreute Lichtimpuls ein optisches Filter FI, sowie ein elektrisches Bandpaßfilter BP. Da die Empfangsechos aufgrund unterschiedlicher Zielentfernungen und Objektreflextivitäten stark variieren, wird zur Stopimpulserzeugung das Constant-Fraction-Trigger-Prinzip im zweiten Signaldetektor SD2 verwendet. Eine Rauschpegelsteuerung RS, sowie das Entfernungstor ET sorgen für eine vernachlässigbar geringe Fehldetektionsrate. Die absolute Laufzeitmessung erfolgt mittels digitalem Zeitintervallzähler ZZ.

Die zur Empfangsleistung proportionale Signalamplitude der Empfängerelemente wird vom zweiten Spitzenwert-Detektor PD2 erfasst und über den zweiten Analog/Digital-Wandler A/D2 zum Auswerteprozessor AP geführt. der Prozessor verarbeitet die Leistungs- und Entfernungsdaten über geeignete Normierungsoperationen zu Reflektivitätsdaten und gibt diese parallel zum Entfernungsbild EB als Reflektivitätsbild RB aus.

Weitere Merkmale des hier gezeigten Prinzips sind:
- Einzelimpulsmessung (ohne Mittelung)
- optischer Zeitintervallzählerstartimpuls
- optische und elektrische Filterung
- Rauschpegelregelung
- Entfernungstorbegrenzung
- elektronsiche Abtastung
- direkte Zeitintervallmessung
- Sendeleistungsmessung
- Empfangsleistungsmessung
- Echtzeit Reflektivitätsbildgewinnung.

Mit der Methode der Einzelimpulsmessung in Kombination mit der direkten Zeitintervallmessung erhält man besonders prägnante Objektübergänge (das heißt Höhensprünge), die wiederum besonders schnelle und effektive Verfahren der Merkmalsextraktion ermöglichen.

Durch Anpassung der entsprechenden einzelnen Empfänger- und Sendergesichtsfelder, der Verwendung optischer und elektrischer Filter sowie einer Rauschpegelregelung mit Detektionsschwellenanpassung, wird eine weitergehende Unabhängigkeit von der Umgebungsbeleuchtung bzw. von den Tages- und Jahreszeiteinflüssen erreicht. Damit können stabile Entfernungswerte mit minimalen Ausfallraten erzeugt werden.

Mit dem einstellbaren Entfernungstor ET wird eine zeitliche Begrenzung der Meßintervalle bzw. der Entfernungsbereiche erreicht. Damit können sowohl die Falschalarmrate als auch die Nahbereichseinflüsse reduziert werden.

Das erfindungsgemäße Verfahren wird nun anhand von Figuren 1, 2, 7 bis 10 näher erläutert.

Die im Sensor SN ermittelten Bilddaten werden zunächst einer Bildkorrektur (in der Bildkorrektureinheit BK) unterzogen. Dazu werden durchgeführt:
a) Eine Korrektur von Position und Lage von Flächen, die im Bereich grösserer Winkelabweichungen vom Lot auftreten.
b) Eine Berücksichtigung der momentanen Lage des Flugkörpers. Der Einfluß der Flächengeometrie des fächerförmigen Abtaststrahles auf die Entfernungsbildung wird anhand von Figur 2 ersichtlich. Für den genauen Vergleich der Referenzinformation wird die äquianguläre Abtastgeometrie in eine äquidistante umgerechnet. Die Meßgrößen Winkel α und Entfernung hₘ werden durch die folgende einfache trigonometrische Funktion y=hₘ · sin α sowie h_{c} =hₘ x cos α mit der senkrechten Entfernung h_{c} und dem Abstand y verknüpft. Zur Einteilung der y-Werte in ein Bildpunktraster kann der Rasterabstand r frei gewählt werden. Ist r festgelegt, so werden die Entfernungswerte hc von 0 bis z.B. +20 vorwärtsgehend, dem Rasterwert yr zugeordnet, der dem jeweils berechneten y am nächsten liegt.

Zwei Fehler, die an Gebäuden auftreten können, sind z.B. das Auftreffen des Laserstrahls auf eine senkrechte Wand und die Abschattung an der Hinterkante eines Gebäudes. Die Korrekturen können folgendermaßen vorgenommen werden:
Trifft der Laserstrahl auf eine senkrechte Wand, so werden einem Rasterpunk yᵣ nacheinander mehrere Entfernungswerte zugeordnet. Da jeweils der höchste Punkt einer Kante gemessen werden soll, wird der kleinste Entfernungswert für den Rasterpunkt yᵣ gespeichert. Der Meßbereich in yᵣ kann von Zeile zu Zeile variieren und ist abhängig vom Höhenwert des äußeren Meßpunktes. Da über diesen Punkt wegen fehlender Daten keine Interpolation mehr durchgeführt werden kann, wird der Rand gekennzeichnet, damit später bei der Segmentierung die gefundenen Vektoren nicht als Gebäudegrenzen interpretiert werden. Werden ein oder mehrere Rasterpunkte übersprungen, das heißt die Sicht war verdeckt, wie es z.B. in einem Abschattungsbereich der Fall ist, so wird der erste Entfernungswert h_{c}, der dem gerade berechneten Rasterpunkt yᵣ zugeordnet wurde, rückwärtsgehend bis zum nächsten belegten yᵣ allen nicht belegten yᵣ ebenfalls zugeordnet. Dadurch werden verdeckte Gebiete durch eine Interpolation näherungsweise bestimmt.
Der Schritt b, die Korrektur des Fluglagefehlers wird durch Messung von Rollwinkel, Nickwinkel und Gierwinkel und deren Berücksichtigung mittels trigonometrischer Gleichungen auf bekannte Weise gelöst.

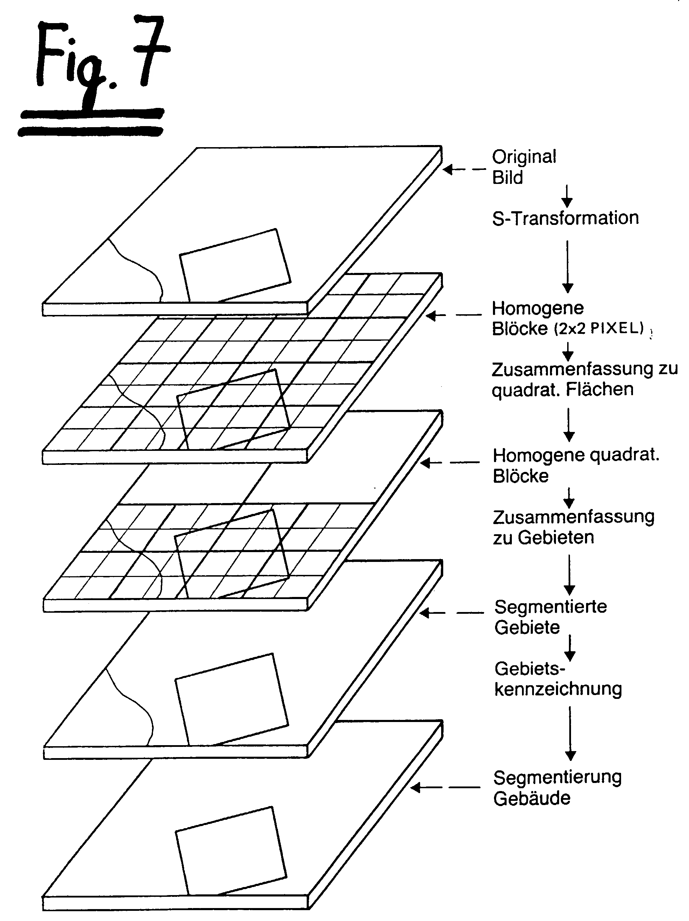

Figur 7 zeigt die Schritte der Objektsegmentierung, die in Figur 1 im Bautei SG durchgeführt wird. Dieser Prozess wird aufgrund der erforderlichen hohen Bearbeitungsgeschwindigkeit hierarchisch durchgeführt. Es wird davon ausgegangen, daß ein Bild der Größe 2ⁿ x 2ⁿ bearbeitet wird. (Dies ist keine Beschränkung der Allgemeinheit, da Bilder entweder auf dieses Format zerlegt oder durch entsprechendes Auffüllen auf diese Größe gebracht werden können). Dieses Bild wird mit der ersten Stufe der S-Transformation in eine Struktur von jeweils 2 x 2 Koeffizienten transformiert, wie anschliessend anhand von Bild 8 erläutert wird. Diese Werte können z.B. sein: B₀ bei einem Entfernungsbild als Mittelwert der Entfernung, B₁ als Flächengradient in x-Richtung, B₂ als Flächengradient in y-Richtung und B₃ als ein Maß für die Textur. Aus diesen Informationen ist eine Aussage über die Objektart extrahierbar, da ein Haus beispielsweise durch ein im allgemeinen recht homogenes Dach mit einem bestimmten Gradienten gekennzeichnet ist, während Wald sich durch ausgeprägte Textur auszeichnet. Bei einem Hausdach haben B₁ und B₂ beispielsweise einen bestimmten, von der Dachneigung abhängigen Wert, während B₃ als Meßwert für die Textur niedrig bleibt. Bei Wald treten ausgesprochen hohe Werte für B₃ auf. Sind die 2 x 2 Blöcke entsprechend klassifiziert, so werden diese zu größeren Einheiten zusammengefasst. Für texturierte Gebiete kann dies direkt durchgeführt werden, indem Blöcke mit 4x4, 8x8, 16x16 u.s.w. Bildelementen gebildet werden. Der Prozess wird solange weitergeführt, bis bei der Zusammenfassung mindestens ein texturarmes Element auftritt. Entsprechend wird bei den homogenen Elementen verfahren, jedoch mit dem Unterschied, daß bei der Zusammenfassung die Blöcke weiteren Stufen der S-Transformation unterworfen werden.

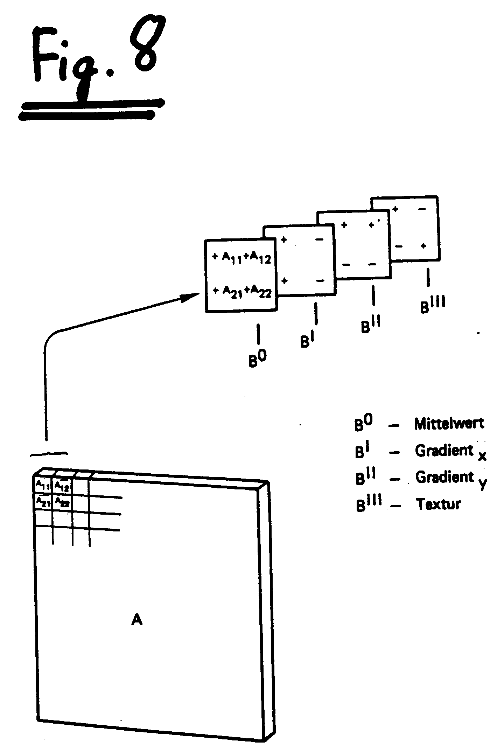

Die weiteren Stufen der S-Transformation berücksichtigen jeweils die B₀-Koeffizienten der Transformation und bilden mit den vier Werten benachbarter Blöcke nach dem anhand von Figur 8 weiter unten erläuterten Schema erneut Transformationskoeffizienten, die wiederum mit dem Mittelwert, den Gradienten und der Textur in den benachbarten, jetzt, wie Figur 7 zeigt, gröber aufgelösten Bildgebieten entsprechen. Durch dieses Verfahren wird verhindert, daß Kanten zwischen homogenen Flächen unberücksichtigt bleiben und damit zu falschen homogenen Flächen führen. Bleiben bei der weiteren Transformation Textur und Gradienten gering oder konstant (größere Flächen gleicher Neigung), so werden die Blöcke zu größeren Blöcken der Form 2ⁿ x 2ⁿ zusammengefasst. Eine Zusammenfassung von anderen Geometrien ist möglich, jedoch führt die angegebene Art zu besonders schnellen und effektiven Auswertverfahren. Das Ergebnis der blockweisen Verarbeitung ist eine Grobstruktur der derart klassifizierten Gebiete.

Figur 7 zeigt das Ablaufschema der Segmentierung. Im Originalbild wird die erste Stufe der S-Transformation durchgeführt. Homogene Blöcke (2 x 2 Bildpunkte) werden zu entsprechend größeren Blöcken zusammengefasst. Die weiteren Stufen der S-Transformation werden solange durchlaufen, bis keine gleichartigen Geländeformen mehr zusammenfaßbar sind (weiße Flächen in der dritten Ebene in Figur 7).

Um die Form der Objekte genauer erhalten zu können, ist eine bessere Bestimmung der Gebietsgrenzen wünschenswert. Diese kann dadurch erfolgen, daß die Grenzen der derart segmentierten Gebiete dahingehend überprüft werden, daß Blöcke mit ähnlichen Eigenschaften mit Transformationkoeffizienten angelagert werden. Diese Anlagerung wird solange fortgeführt, bis eine Begrenzungslinie, beispielsweise durch einen Höhensprung (Begrenzung Gebäude, Feld) oder eine Änderung der Textur (Wald, Feld) gefunden wird. Durch diese Programmstrukturierung wird erreicht, daß der Rechenaufwand im Gegensatz zu einer sequentiellen Anlagerung von Punkten nur mit dem Umfang der Gebiete, nicht jedoch mit der Bildfläche zunimmt, so daß eine beträchtliche Aufwandsersparung erreicht wird.

Figur B zeigt die prinzipielle Vorgehensweise bei der S-Transformation bei einer Segmentierung. Das Gesichtsfeld A (Entfernungsbild) wird in Pixel unterteilt. Die beispielsweise gezeigten Pixel A₁₁, A₁₂, A₂₁ und A₂₂ werden bei der ersten Stufen des S-Transformation in die Werte B₀ (Mittelwert), B₁ (den Gradienten in x-Richtung), B₂ (den Gradienten in y-Richtung) und B₃ (die Textur), transformiert. Die Transformationen erfolgen durch Aufsummieren oder Subtrahieren der entsprechenden Einzelelemente, wie in der Figur gezeigt. So wird der Mittelwert z.B. durch Aufsummierung der vier Einzelwerte erreicht, der Gradient in x-Richtung durch Aufsummieren der beiden linken und Subtrahieren der beiden rechten Pixel.

Weitere Berechnungen von Merkmalen wie Höhendifferenz zur Umgebung, Länge des Umfangs, Verhältnis Fläche zu Umfang, Trägheitsachsen, Momente, Lage der Begrenzungsvektoren zueinander u.s.w. liefern weitere charakteristische Merkmale zur Objektklassifikation.

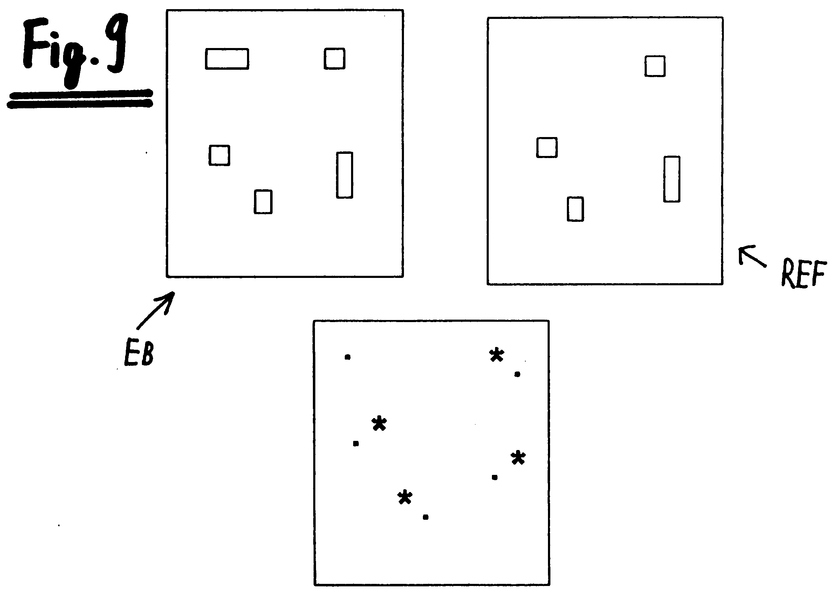

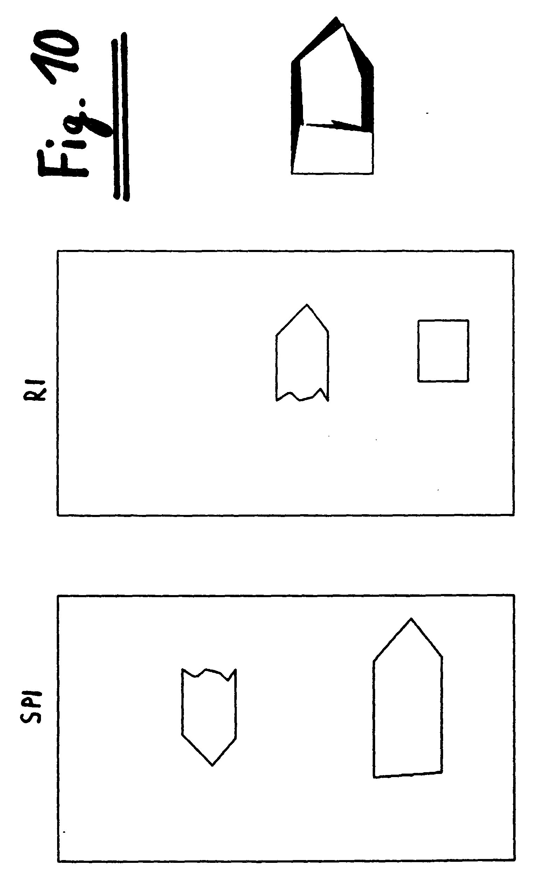

Anhand der Figuren 9 und 10 wird die Merkmalsextraktion in dem Bauteil ME der Figur 1 und der Merkmalsvergleich im Bauteil MV der Figur 1 erläutert.

Der Prozess der Merkmalserkennung und Positionsbestimmung kann in zwei unabhängigen Verfahren durchgeführt werden. Diese Verfahren können jedes für sich die Übereinstimmung mit der Referenzinformation durchführen und damit zu einer Navigationsaufdatung beitragen oder auch parallel arbeiten, um die Sicherheit zu erhöhen.

Das erste der Verfahren, im weiteren "Punkt-Distanz-Correlation, PDC", genannt, wird anhand von Figur 9 erläutert. Dieses Verfahren kennzeichnet jedes gefundene Objekt einer Objektklasse durch einen Punkt. Dies kann der Flächenschwerpunkt, ein oder mehrere Randpunkte oder ein ähnlich definierter Punkt sein. Figur 9 zeigt oben links z.B. die segmentierten Bilddaten eines realen Entfernungsbildes EB und oben rechts ein entsprechendes Referenzbild REF. In der unteren Hälfte der Figur 9 ist die Punkt-Distanz-Correlation gezeigt. Die Objekte des realen Bildes EB - genauer z.B. ihre Mittelpunkte - sind hier durch Kästchen angedeutet, die Objekte oder ihre Mittelpunkte des Referenzbildes REF durch Sternchen. Die Position der Punkte einer Objektklasse (beispielsweise Gebäude) werden in einem Stück des überflogenen Gebiets aus dem segmentierten Gebieten extrahiert und in einem Speicherbereich abgelegt. Die gleiche Art der Information wird aus der entsprechenden Referenz berechnet. Nun wird versucht, beide Punktwolken derart gegeneinander zu verschieben, daß die Summe der entsprechenden Punktabstände eines Paares zugeordneter Referenz- und Szenenpunkte minimal wird. Dies wird erfindungsgemäß dadurch erreicht, daß durch eine translatorische Verschiebung zwischen Referenz und Szene zwei Punkte zur Deckung gebracht werden. Sodann werden alle Punktepaare gezählt, deren gegenseitiger Abstand kleiner als eine vorher bestimmte Schwelle ist. Werden genügend solcher Paare gefunden, so daß mit hoher Sicherheit eine Übereinstimmung von Referenz und Szene vorliegt, wird die Position der Übereinstimmung vermessen und der Wert für eine Positionsaufdatung verwendet. Durch eine iterative Verschiebung zwischen Szene und Referenz kann die Genauigkeit des Verfahrens noch gesteigert werden. Verschiedene Objektklassen können hierbei getrennt behandelt werden, beispielsweise Bäume/Baumgruppen unabhängig von der PDC mit Gebäuden, so daß voneinander weitgehend unabhängige Resultate entstehen, die jeweils in einem übergeordneten Programm überwacht und bewertet werden können.

Um das Verfahren weitgehend unabhängig von nicht meßbaren Geschwindigkeitsfehlern und Richtungsfehlern zu machen, werden bevorzugt relativ kurze Szenenlängen (etwa 400 m) verglichen. Die Ergebnisse der Übereinstimmung werden jedoch gewichtet aufaddiert, so daß die Information über die Vergangenheit eine zeitlang mitgeführt wird, jedoch durch die Gewichtung umsomehr an Einfluß verliert, je weiter die entsprechenden Objekte am Flugweg zurückliegen.

Das zweite verwendete Verfahren, die sogenannte "Geometrische Formanalyse, GFA", wird anhand von Figur 10 beschrieben und benutzt beschreibende Formelemente zur Charakterisierung der einzelnen Objekte. Figur 10 zeigt links z.B. einen Speicherinhalt SPI für eine bestimmte Objektgruppe, in der Mitte die entsprechende Referenzinformation RI und rechts das durch Übereinanderlegen gefundene Vergleichsbild zwischen zwei bestimmten Objekten.

Gebäude werden beispielsweise durch die Form des Grundrisses - also ihre Berandungsvektoren - gekennzeichnet. Dazu werden zunächst aus dem segmentierten Bild des Gebäudes mit üblichen Methoden der Kantenfindung die Begrenzungsvektoren bestimmt. Die Referenzinformation RI liegt nach eventuell nötigen Vorverarbeitungsschritten in der gleichen Weise aufbereitet vor. Zunächst wird Szene und Referenz in der Weise auf Übereinstimmung hin untersucht, daß durch translatorische Verschiebung versucht wird, die Einzelvektoren in möglichst gute Übereinstimmung zu bringen. Kriterium der Übereinstimmung ist hierbei die von der Projektion des einen Vektors auf den anderen eingeschlossene Differenzfläche, in Figur 10 rechts grau gezeigt, gewichtet mit den Vektorlängen. Um die Suche nach möglichen Übereinstimmungen und damit den Rechenaufwand zu minimieren, werden die einzelen Vektoren durch ihre Eigenschaften wie Richtung, Lage und Länge charakterisiert. Die Übereinstimmung wird zunächst nur bei Vektorpaaren überprüft, die entsprechend ähnliche Merkmale aufweisen. Nach der berechneten translatorischen Verschiebung, die zunächst für ähnliche Referenz und Szenenvektoren durchgeführt wurde, werden mit der identischen Verschiebung alle anderen in der Szene vorhandenen Vektoren daraufhin überprüft, ob ein entsprechend zugeordneter Vektor in der Referenz vorhanden ist. Je nach Übereinstimmung der Einzelvektoren werden auf diese Weise eventuell mehrere Positionen einer möglichen Übereinstimmung gefunden. Die entsprechenden Positionen werden nun nach weiteren Überstimmungsmerkmalen hin untersucht. Dazu wird der lokale Kontext der Vektoren hinzugezogen. Es wird überprüft, inwieweit die benachbarten Vektoren die Übereinstimmungswahrscheinlichkeit der Einzelvektoren erhöhen. Die Überprüfung geschieht hier ebenfalls durch Berechnung entsprechender Referenzflächen. Aufgrund der Differenzflächen, gewichtet mit der Anzahl der Objekte, wird geprüft, ob eine genügend gute Übereinstimmung erzielt wurde. Dazu muß nicht jedes Objekt in Szene und Referenz übereinstimmen, so daß das Verfahren auch bei veralteter Referenz oder Veränderung der Szene funktioniert.

Es ist auch möglich, weitere Merkmale, die für das Szenenobjekt berechnet und bereits erwähnt wurden, zur Überprüfung der Übereinstimmung heranzuziehen, wobei in diesem Fall vorausgesetzt wird, daß diese Merkmale auch in der Referenz enthalten sind oder daraus berechenbar sind.

## Patentansprüche

1. Navigationsverfahren für Luftfahrzeuge, unter Verwendung eines, bevorzugt zeilenweise abbildenden entfernungsmessenden Systems als Sensor (**S N**), einer Bildverarbeitungsvorrichtung und eines Referenzspeichers (**R S B**), wobei zur Positionsbestimmung ein Vergleich von aus den Sensordaten gewonnenen Informationen mit aus dem Referenzspeicher gewonnenen Informationen durchgeführt wird, **dadurch gekennzeichnet**, daß aus den Sensordaten zweidimensionale Entfernungsbilder (**E B**) erzeugt werden, in dem zweidimensionalen, bildpunktweise vorliegenden Entfernungsbild mittels Objektsegmentierung (**S G**) vorwählbare Typen von Objekten gesucht werden, den gefundenen Objekten ihre Position sowie sie charakterisierende Merkmale in einer Merkmalsextraktionseinheit (**M E**) zugeordnet werden, und anhand dieser Objektmerkmale der Vergleich (**M V**) mit den Informationen im Referenzspeicher (**R S B**) vorgenommen wird.

2. Verfahren nach Anspruch 1, **dadurch gekennzeichnet**, daß für die Objektsegmentierung ein hierarchisches Verfahren wie die S-Transformation benutzt wird.

3. Vorrichtung mit Sensor (SN), Bildverarbeitungseinrichtung und Referenzspeicher (RSB) zur Durchführung des Navigationsverfahrens für Luftfahrzeuge nach Anspruch 1 oder 2, **gekennzeichnet durch** einen Sensor (SN), umfassend
- zwei zueinander parallel angeordnete Diodenzeilen als Sender und Empfänger,
- eine Optik, die jedem Element der Senderzeile einen Punkt am Boden sowie ein Element der Empfängerzeile zuordnet,
- eine Elektronik, die aus dem Zeitintervall zwischen abgesandtem und empfangenem Impuls Entfernungsbilddaten berechnet,
- einen System-Timer, mit dem die Winkelablenkung durch nacheinanderfolgendes Ansteuern der einzelnen Elemente der Senderzeile mit korreliertem Ansteuern des entsprechenden Elements der Empfängerzeile zusteuern ist.

4. Vorrichtung nach Anspruch 3, **gekennzeichnet durch** einen Sensor, der mit einem optischen Multiplexer und nur einem Empfängerelement ausgerüstet ist.

## Claims

1. Navigation method for aircraft using a distance measuring system preferably imaging line by line as sensor (SN), an image processing device and a reference memory (RSB), in which a comparison of information derived from the sensor data with information derived from the reference memory is carried out for the position determination, characterized in that two-dimensional distance images (EB) are produced from the sensor data, objects of preselectable types are sought by means of object segmentation (SG) in the two-dimensional distance image which is in the form of scanning elements, the objects found, their positions and their characterizing features are associated in a feature extraction unit (ME), and the comparison (MV) with the information in the reference memory (RSB) takes place with reference to these object features.

2. Method according to claim 1, characterized in that a hierarchical method such as S-transformation is used for the object segmentation.

3. Device with sensor (SN), image-processing device and reference memory for implementing the navigation method for aircraft according to claim 1 or claim 2, characterized by a sensor (SN) including
- two rows of diodes arranged parallel to one another as transmitters and receivers,
- an optical system which associates with each element of the transmitter row a point on the ground as well as an element of the receiver row,
- an electronic unit which computes distance image data from the time interval between transmitted pulse and received pulse,
- a system timer with which the angular deflection is to be controlled by successive triggering of the individual elements of the transmitter row with correlated triggering of the corresponding element of the receiver row.

4. Device according to claim 3, characterized by a sensor which is equipped with an optical multiplexer and only one receiver element.

## Revendications

1. Procédé de navigation pour aéronefs, utilisant, comme capteur (S N), un système télémétrique de préférence à visualisation sous forme de lignes, un dispositif de traitement d'images et une mémoire de référence (R S B), la détermination de la position étant effectuée en comparant des informations recueillies à partir des données captées et des informations fournies par la mémoire de référence, caractérisé en ce qu'à partir des données captées sont générées des images d'éloignement (E B) en deux dimensions, des types présélectionnés d'objets sont recherchés par segmentation d'objets (S G) dans l'image d'éloignement en deux dimensions présentée sous forme de points d'image, la position trouvée pour les objets ainsi que leurs caractéristiques leur sont attribuées dans une unité d'extraction de caractéristiques (M E) et une comparaison (M V) est effectuée avec les informations de la mémoire de référence (R S B) sur la base de ces caractéristiques d'objet.

2. Procédé selon la revendication 1, caractérisé en ce qu'un procédé hiérarchique comme la transformation S est utilisé pour la segmentation d'objets.

3. Dispositif comprenant un capteur (S N), un dispositif de traitement d'images et une mémoire de référence (R S B) pour réaliser le procédé de navigation pour aéronefs selon la revendication 1 ou 2, caractérisé par un capteur (S N) comprenant :
- deux rangées de diodes respectivement émettrices et réceptrices disposées parallèlement l'une à l'autre,
- une optique attribuant à chaque élément de la rangée émettrice un point au sol ainsi qu'un élément de la rangée réceptrice,
- une électronique calculant des données d'image d'éloignement à partir de l'intervalle de temps entre l'impulsion émise et l'impulsion reçue,
- une horloge de système permettant de moduler la déviation angulaire par déclenchement successif des différents éléments de la rangée émettrice, conjointement avec un déclenchement corrélé de l'élément correspondant de la rangée réceptrice.

4. Dispositif selon la revendication 3, caractérisé par un capteur équipé d'un multiplexeur optique et d'un seul élément récepteur.
